**Europäisches Patentamt**

**European Patent Office**

**Office européen des brevets**

(19)

(11) Veröffentlichungsnummer: **0 027 601**
**B1**

(12) ## EUROPÄISCHE PATENTSCHRIFT

(45) Veröffentlichungstag der Patentschrift:
08.05.85

(51) Int. Cl.⁴: **G 01 N 30/12,** G 01 N 1/00

(21) Anmeldenummer: **80106116.9**

(22) Anmeldetag: **08.10.80**

(54) **Dosiereinrichtung für die Gaschromatographie.**

(30) Priorität: **19.10.79 DE 2942395**

(43) Veröffentlichungstag der Anmeldung:
**29.04.81 Patentblatt 81/17**

(45) Bekanntmachung des Hinweises auf die Patenterteilung:
**08.05.85 Patentblatt 85/19**

(84) Benannte Vertragsstaaten:
**AT CH DE FR GB IT LI**

(56) Entgegenhaltungen:
**DE - A - 1 523 013**
**DE - A - 1 623 062**
**DE - A - 1 920 768**
**US - A - 3 362 228**

(73) Patentinhaber: **Siemens Aktiengesellschaft, Berlin und München Wittelsbacherplatz 2, D-8000 München 2 (DE)**

(72) Erfinder: **Braunweiler, Max, Dipl.-Phys., Rheingoldstrasse 10, D-6800 Mannheim 24 (DE)**

EP 0 027 601 B1

**Beschreibung**

Die Erfindung bezieht sich auf eine Dosiereinrichtung für die Gaschromatographie, mit einem Dosierstößel, der mit einem Dosiervolumen in Form einer Ausnehmung im Stößelschaft versehen ist, und der axial so bewegbar ist, daß das Dosiervolumen zwischen einer Probenaufnahmestellung, in der sich das Dosiervolumen im Probenstrom befindet, und einer Abgabestellung, in der das Dosiervolumen sich in einem an die Trennsäule angeschlossenen Probenverdampfungsraum befindet, bewegbar ist.

Derartige Einrichtungen sind zur Aufbereitung von flüssigen Proben für die gaschromatographische Analyse bekannt, beispielsweise aus der DE-A-1 920 768.

Es wird gefordert, die flüssige Probe im elektrisch beheizbaren Verdampfungsraum möglichst schnell und vollständig zu verdampfen, um sie unverzögert der Trennsäule zuleiten und damit bessere Trennergebnisse erzielen zu können.

Um dieser Forderung nachzukommen, ist bei der bekannten Dosiereinrichtung der Verdampfer, in welchem sich der Probenverdampfungsraum befindet, mit Hilfe einer in seiner Wand eingelassenen Heizpatrone aufheizbar.

Um den unerwünschten Wärmeübergang zwischen Verdampferteil und dem die Probenflüssigkeit führenden Teil möglichst klein zu halten, sind hier konstruktiv aufwendige Vorkehrungen getroffen worden. Das Paßstück aus schlecht wärmeleitendem Material zur Führung des Dosierstößels muß in einem sehr dünnwandigen Zylinder aus Edelstahl gefaßt werden, das mit dem Paßstück verbundene Ende des Verdampferteils ist bis auf eine geringe Materialstärke zu hinterdrehen.

Weitere Schwierigkeiten ergeben sich, wenn hochsiedende Probenflüssigkeiten zu verdampfen sind. Die dazu erforderlichen hohen Temperaturen lassen sich in den von außen beheizten Verdampfungsräumen nur schwer mit der zur schlagartigen Verdampfung notwendigen Anstiegsgeschwindigkeit erzielen. Die maximale Verdampfungstemperatur ist auch durch die kritische Wärmebelastbarkeit der Baustoffe der Einrichtung, insbesondere der Dichtungen in den Stößeldurchführungen, begrenzt.

Es besteht demgemäß die Aufgabe, die bekannte Dosiereinrichtung, die überlicherweise mit einem programmgesteuerten Stellantrieb für die Stößelbewegung versehen ist, so zu verbessern, daß auch bei hochsiedenden Probensubstanzen eine schnelle Verdampfung der Proben erreicht wird.

Eine Lösung der Aufgabe wird darin gesehen, daß erfindungsgemäß der das Dosiervolumen tragende Teil des Dosierstößels aus gut wärmeleitendem Material besteht und aus einer Stromquelle hoher Leistung direkt aufheizbar ist. Dies kann z. B. durch eine im Innern oder in der Wand des Stößels isoliert angebrachte elektrische Heizwicklung oder einen Heizkörper geschehen.

Bei einer bevorzugten Ausführung ist jedoch der das Dosiervolumen tragende Teil des Stößels als elektrischer Heizwiderstand ausgebildet. Die Leistung der elektrischen Stromquelle in der Größenordnung von mehreren Hundert Watt wird impulsartig mit einer Impulsdauer von bis zu 2 sec dem elektrischen Heizwiderstand zugeführt. Dadurch wird während des Aufheizimpulses eine Temperatur von bis zu 500° C erreicht, so daß die Probe nahezu schlagartig verdampft und mit Hilfe von Trägergas aus dem Verdampfungsraum in die Trennsäule gespült wird.

Da der Stößel relativ schnell abkühlt, kann er weit vor Ende der Analysenzeit wieder in Aufnahmestellung gebracht werden. Es ist somit möglich, eine große Anzahl von Dosierungen in schneller Folge automatisch durchzuführen.

Weitere Vorteile und Merkmale der erfindungsgemäßen Einrichtung ergeben sich aus der folgenden Beschreibung von Ausführungsbeispielen in Verbindung mit den abhängigen Ansprüchen.

Fig. 1 zeigt eine schematische Darstellung einer Dosiereinrichtung gemäß der Erfindung,

Fig. 2 ein Ausführungsbeispiel eines heizbaren Dosierstößels.

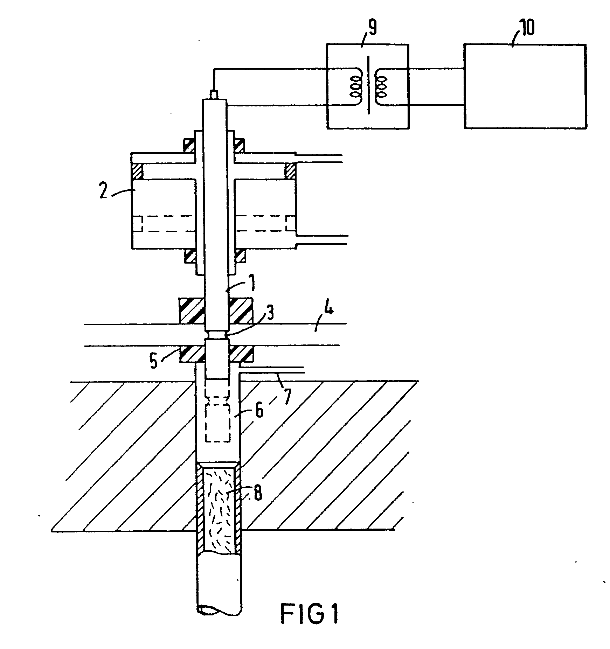

Die in Fig. 1 dargestellte Dosiereinrichtung besteht im wesentlichen aus einem Dosierstößel 1, der mittels eines pneumatischen Stellantriebs 2 in eine obere und eine untere Endlage bewegbar ist.

Im unteren Endabschnitt des zylindrischen Schafts des Dosierstößels 1 ist ein Dosiervolumen 3 in Form einer Ringnut angebracht.

In der gezeichneten, oberen Endlage des Dosierstößels 1 befindet sich der mit dem Dosiervolumen 3 versehene Abschnitt des Stößels 1 in einem die Probenflüssigkeit enthaltenden Probenaufnahmeraum 4.

Durch entsprechende Ansteuerung des Stellantriebs 2 wird der Dosierstößel 1 in seine — gestrichelt eingezeichnete — untere Endlage bewegt. Dabei wird der untere Endabschnitt mit dem Dosiervolumen 3 unter Mitnahme der darin befindlichen Probenflüssigkeit durch eine Teflondichtung 5 in einen Verdampfungsraum 6 gebracht, der über einen Anschluß 7 mit einer Trägergasquelle verbunden ist und in eine gaschromatographische Trennsäule 8 mündet.

Zur schnellen Verdampfung der in dem Dosiervolumen 3 befindlichen Flüssigkeitsprobe ist der Dosierstößel 1 in dem das Dosiervolumen 3 tragenden Abschnitt elektrisch direkt beheizbar, insbesondere als elektrischer Heizwiderstand, ausgebildet, der aus einer Stromquelle 9 mit einer Leistung in der Größenordnung von mehreren Hundert Watt gespeist wird. Durch die so erreichbar hohe Aufheizgeschwindigkeit von etwa 250° C/sec wird die im Dosiervolumen 3 befindliche Probe nahezu schlagartig verdampft und von dem eingeleiteten Trägergas in die Trennsäule 8 gespült.

Mit einem Heizimpuls von 2 sec Dauer können so Stößelwandtemperaturen bis zu 500° C erreicht werden, so daß es auch möglich ist, hochsiedende Substanzen sehr schnell zu verdampfen.

Die Dauer des Heizimpulses läßt sich in Abhängigkeit von der höchstsiedenden Komponente der Flüssigkeitsprobe mit Hilfe des Steuergeräts 10 einstellen.

Die gezeigte Dosiereinrichtung kann mit einfachen Mitteln vollautomatisch betrieben werden, so daß eine große Anzahl von Dosierungen ohne weitere Wartung oder Bedienung automatisch durchgeführt werden kann.

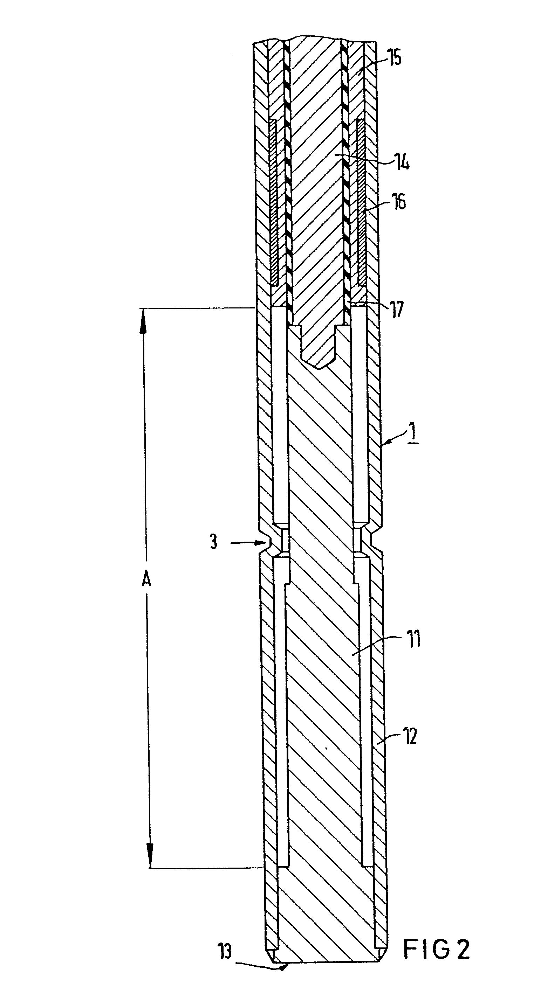

Fig. 2 zeigt eine bevorzugte Ausführungsform eines aufheizbaren Dosierstößels 1 im Längsschnitt.

In seinem unteren Endabschnitt besteht er aus einem Kern 11 und einer mit Abstand koaxial über diesen geschobenen, relativ dünnwandigen Hülse 12, in welcher eine Ringnut als Dosiervolumen 3 angebracht ist.

Kern 11 und Hülse 12 bestehen aus dem gleichen, korrosionsbeständigen Material, vorzugsweise aus Edelstahl, und sind an der Spitze 13 des Dosierstößels 1 elektrisch und mechanisch miteinander verbunden.

Der Kern 11 ist an seinem oberen Ende mit einem in dem hohlen Dosierstößel 1 koaxial geführten Kupferstab 14 und über diesen mit einem Anschluß der Stromquelle 9 (Figur 1) verbunden, deren anderer Anschluß zu einem in den hohlen Dosierstößel 1 eingeschobenen Hohlzylinder 15 aus Kupfer oder einem anderen gut leitenden Material führt. Der Hohlzylinder 15 ist zur Sicherung eines guten Stromübergangs mittels Hartlot 16 im unteren Abschnitt des hohlen Dosierstößels 1 mit diesem verbunden und gegen den Kupferstab 14 durch eine Isolierschicht 17 elektrisch isoliert.

Durch geeignete Querschnittsdimensionierung und/oder Materialauswahl wird erreicht, daß Kern und der das Dosiervolumen 3 enthaltende Abschnitt der Hülse 12 als Teil des Dosierstößels 1 einen etwa gleich großen elektrischen Widerstand aufweisen.

Wird über Kupferstab 14 und Hohlzylinder 15 Strom zugeführt, wirken Kern 11 und Hülse 12 als Reihenschaltung von Widerständen, so daß sich der Teil A des Stößels 1 sehr schnell aufheizt und die in dem dort befindlichen Dosiervolumen 3 gehaltene Flüssigkeitsprobe verdampft. Nach Abschalten der Heizung kühlt der aufheizbare Teil A schnell wieder ab, so daß der Dosierstößel 1 zur Aufnahme einer weiteren Probe in seine obere Endlage gefahren werden kann.

## Patentansprüche

1. Dosiereinrichtung für die Gaschromatographie, mit einem Dosierstößel (1), der mit einem Dosiervolumen (3) in Form einer Ausnehmung im Stößelschaft versehen ist, und der axial so bewegbar ist, daß das Dosiervolumen (3) zwischen einer Probenaufnahmestellung, in der sich das Dosiervolumen (3) im Probenstrom befindet, und einer Abgabestellung, in der das Dosiervolumen (3) sich in einem an die Trennsäule angeschlossenen Probenverdampfungsraum (4) befindet, bewegbar ist, dadurch gekennzeichnet, daß der das Dosiervolumen (3) tragende Teil des Dosierstößels (1) aus gut wärmeleitendem Material besteht und aus einer Stromquelle (9) hoher Leistung direkt aufheizbar ist.

2. Dosiereinrichtung nach Anspruch 1, dadurch gekennzeichnet, daß der das Dosiervolumen (3) tragende Teil des Stößels (1) als elektrischer Heizwiderstand ausgebildet ist.

3. Dosiereinrichtung nach Anspruch 1, dadurch gekennzeichnet, daß im Innern oder in der Wand des Dosierstößels (1) eine elektrische Heizwicklung angebracht ist.

4. Dosiereinrichtung nach Anspruch 2, dadurch gekennzeichnet, daß der aufheizbare Teil (A) des Dosierstößels (1) aus einem zylindrischen Kern (11) besteht, über den koaxial mit Abstand eine zylindrische, mit einer Ringnut als Dosiervolumen (3) versehene Hülse (12) geschoben ist und daß Kern (11) und Hülse (12) an der Spitze (13) des Dosierstößels (1) elektrisch und mechanisch miteinander verbunden und als Reihenschaltung von Widerständen aus der Stromquelle (9) gespeist sind.

5. Dosiereinrichtung nach Anspruch 4, dadurch gekennzeichnet, daß Kern (11) und Hülse (12) aus dem gleichen, korrosionsbeständigen Material, vorzugsweise Edelstahl, bestehen und der Kern (11) an einem Kupferstab (14), die Hülse (12) an einem in sie eingeschobenen Hohlzylinder (15) aus Kupfer als Stromzuleitungen elektrisch und mechanisch angeschlossen sind.

6. Dosiereinrichtung nach Anspruch 2, dadurch gekennzeichnet, daß die Leistung der elektrischen Stromquelle (9) in der Größenordnung von mehreren Hundert Watt liegt und impulsartig mit einer Impulsdauer von bis zu 2 sec dem aufheizbaren Teil (A) des Dosierstößels (1) zuführbar ist.

## Claims

1. A dosing device for gas chromatography, comprising a dosing plunger (1) which is provided with a dosing space (3) formed by a recess in the plunger shaft, and which is axially movable in such a way that the dosing space (3) can be moved between a sample receiving position in which the dosing space (3) is in the sample flow, and a delivery position in which the dosing space (3) is in a sample evaporation space (4) which is connected to the separating column, characterised in that the part of the dosing plunger (1) which carries the dosing space (3) consists of a highly heat-conductive material and can be directly heated from a high-output current source (9).

2. A dosing device as claimed in Claim 1, characterised in that the part of the plunger (1) which carries the dosing space (3) is designed as an electrical heating resistor.

3. A dosing device as claimed in Claim 1, characterised in that an electric heating coil is installed in the interior or in the wall of the dosing plunger (1).

4. A dosing device as claimed in Claim 2, characterised in that the part (A) of the dosing plunger (1) which can be heated, consists of a cylindrical core (11), over which a cylindrical sleeve (12), provided with an annular groove as dosing space (3), is coaxially pushed and spaced therefrom; and that the core (11) and the sleeve (12) are electrically and mechanically connected to one another at the top (13) of the dosing plunger (1) and are fed from the current source (9) as a series connection of resistors.

5. A dosing device as claimed in Claim 4, characterised in that the core (11) and the sleeve (12) consist of the same corrosion-resistant material, preferably high-grade steel, and the core (11) is electrically and mechanically connected to a copper rod (14) and the sleeve (12) to a hollow cylinder (15) of copper, which is inserted into the latter, serving as current supply lines.

6. A dosing device as claimed in Claim 2, characterised in that the power of the electric current source (9) is of the order of magnitude of serveral hundred watts and can be supplied to the heatable part (A) of the dosing plunger (1) pulsewise with a pulse duration of up to 2 sec.

## Revendications

1. Dispositif de dosage pour la chromatographie en phase gazeuse, comprenant un poussoir de dosage (1), qui est muni d'un volume de dosage (3) sous forme d'un évidement ménagé dans la tige du poussoir, et qui peut être déplacé axialement, de manière à ce que le volume de dosage (3) puisse se déplacer entre une position de prélèvement de l'échantillon dans laquelle le volume de dosage (3) se trouve dans le courant de l'échantillon, et une position de transfert dans laquelle le volume de dosage (3) se trouve dans une chambre (4) d'évaporation de l'échantillon raccordée à la colonne séparatrice, caractérisé en ce que la partie du poussoir de dosage (1), qui porte le volume de dosage (3) est en un matériau bon conducteur de la chaleur et peut être chauffée directement par une source de courant électrique (9) de grande puissance.

2. Dispositif de dosage suivant la revendication 1, caractérisé en ce que la partie du poussoir (1), qui porte le volume de dosage (3), est constituée sous la forme d'une résistance electrique de chauffage.

3. Dispositif de dosage suivant la revendication 1, caractérisé en ce qu'à l'intérieur ou dans la paroi du poussoir de dosage (1) est fixé un enroulement électrique de chauffage.

4. Dispositif de dosage suivant la revendication 2, caractérisé en ce que la partie (A) du dispositif de dosage (1), qui peut être chauffée, est constituée d'une âme cylindrique (11) sur laquelle est enfilée à distance et coaxialement une douille (12) cylindrique munie d'une gorge annulaire servant de volume de dosage (3), et en ce que l'âme (11) et la douille (12) sont reliées entre elles électriquement et mécaniquement à la pointe du poussoir de dosage (1) et sont alimentées, en tant que montage en série de résistances, par la source de courant électrique (9).

5. Dispositif de dosage suivant la revendication 4, caractérisé en ce que l'âme (11) et la douille (12) sont en le même matériau résistant à la corrosion, de préférence en acier fin, et l'âme (11) est raccordée électriquement et mécaniquement à une barre en cuivre (14) servant de conducteur d'amenée du courant électrique, et la douille (12) est raccordée électriquement et mécaniquement à un cylindre creux (15) en cuivre qui y est introduit et qui sert de conducteur d'amenée du courant electrique.

6. Dispositif de dosage suivant la revendication 2, caractérisé en ce que la puissance de la source de courant électrique (9) est de l'ordre de grandeur de plusieurs centaines de watt et peut être amenée à la partie (A) du poussoir de dosage (1) qui peut être chauffée, par impulsion fournie avec une durée d'impulsion allant jusqu'à 2 secondes.

FIG 1

FIG 2